**Europäisches Patentamt**

**European Patent Office**

**Office européen des brevets**

(19)

(11) Veröffentlichungsnummer: **0 460 409 A2**

(12) **EUROPÄISCHE PATENTANMELDUNG**

(21) Anmeldenummer: **91107267.6**

(22) Anmeldetag: **07.05.91**

(51) Int. Cl.⁵: **G01N 30/60, G01N 30/56**

(30) Priorität: **07.05.90 DE 4014605**

(43) Veröffentlichungstag der Anmeldung:
**11.12.91 Patentblatt 91/50**

(84) Benannte Vertragsstaaten:
**AT BE CH DE DK ES FR GB GR IT LI LU NL SE**

(71) Anmelder: **KRONWALD SEPARATIONSTECHNIK GmbH**
**Dörntelsberg 5a**
**W-6920 Sinsheim(DE)**

(72) Erfinder: **Kronwald, Klaus**
**Schillerstrasse 29**
**W-6920 Sinsheim(DE)**

(74) Vertreter: **Patentanwälte Zellentin & Partner**
**Rubensstrasse 30**
**W-6700 Ludwigshafen(DE)**

(54) **Mehrteiliger Chromatographiesäulenanschluss.**

(57) Die vorliegende Erfindung betrifft sowohl einen mehrteiligen Chromatographiesäulenanschluß, bestehend aus einer am Wulst (16) eines Säulenkörpers (15) oder einem Gewinde einer Metallsäule oder einem diesen umgehenden Mantel verankerten zweiteiligen Verschraubung mit Oberteil (1) und Unterteil (2), darin befestigter Durchführung (3) mit Kapillare (4) und endseitigem Dichtungseinsatz (5) aus Weichkunststoff, wobei das Verschraubungsoberteil (1) ein Fenster (6) aufweist, in dem eine Mutter (7) frei drehbar angeordnet ist, die Durchführung (3) ein Außengewinde besitzt, das mit der Mutter kämmt, Mutter (7) und Durchführung (3) aus einem Hartmaterial bestehen, und mit dem unteren Ende der Durchführung (3) ein Zwischenstück (8)aus Hartwerkstoff verschraubt ist, wobei zwischen beiden Teilen die Kapillare (4) in Pressung dichtend gehalten ist, an das freie Ende des Zwischenstücks (8) der Dichtungseinsatz (5) angeschraubt ist und Zwischenstück (8) und Dichtungseinsatz (5) miteinander fluchtende Bohrungen besitzen, die an die Kapillare (4) angeschlossen sind, und aneinander anliegende Dichtflächen aufweisen, als auch ein Verfahren zum Befüllen einer Chromatographiesäule, wobei man die Säule mit einer Aufschlämmung des Trennkörpers befüllt und die Trägerflüssigkeit unter Druck mit einem Stempel austreibt und man auf die Aufschlämmung den Dichtungseinsatz auflegt und mit Hilfe einer als Spindel wirkenden Durchführung gegen die Aufschlämmung bewegt, Flüssigkeit austreibt, danach den Dichtungseinsatz und die Spindel am Ort in der Säule beläßt und die Chromatographie durchführt.

Fig 1

Die vorliegende Erfindung betrifft einen mehrteiligen Anschluß für Chromatographiesäulen zur Durchführung von Substanztrennungen an variablen Packungsmaterialien, welche in einem Säulenkörper gepackt werden, der aus Glas, Keramik, Saphir oder Edelstahl bestehend kann. Die Packungsmaterialien können Kieselgel, Kieselgeldrivate oder Vollpolymergele verschiedener Art oder Agarosegele bzw. Polyacrylamidgele sein.

Die Säulenkörper gibt es in drei Ausführungen, zylindrisch mit endständigen Anschlußflanschen, zylindrisch mit endständigen Außengewinde und zylindrisch ohne Flansche und ohne endständige Außengewinde.

Eine Trägerflüssigkeit transportiert in ihr gelöste Probesubstanzen durch einen um Anschluß laufenden Kapillarschlauch in das Säuleninnere. Am Ende des Säulenanschlusses wird die Fülssigkeit über eine Fritte aus feinporigem Glassinter, Keramik oder Edelstahl geführt, um eine gleichmäßige Verteilung über den Säulenquerschnitt zu gewährleisten.

Das Befüllen der Säule mit feinstpulvrigen Packungsmaterialien kann mit Hilfe einer Suspension dieses Materials vorgenommen werden, wobei die Suspension in die Säule gefüllt und anschließend mit einem Kolben komprimiert wird. Dabei tritt Trägerflüssigkeit aus.

Durch diese Verdichtung der Packungspartikel wird eine optimale räumliche Anordnung der Partikel erreicht, so daß ein uniformes Säulenbett erzeugt wird.

Für diesen Packungsvorgang muß die Chromatographiesäule normalerweise in eine Vorrichtung eingespannt werden, in der der Kolben, nach dem Einführen der Säule, unter maschineller Belastung auf die Suspension gedrückt wird. Nach dem Verdichten muß dieser Kolben vorsichtig entfernt und der eigentliche Chromatographiesäulenanschluß eingeführt werden.

Diese Vorgehensweise ist sehr aufwendig, da sie zusätzlich maschinelle Vorrichtungen erfordert. Ferner wird durch den Belastungswechsel beim Abziehen des Kolbens die Homogenität der Säulenpackung gestört, wodurch die Leistungsfähigkeit der Säule beeinträchtigt wird.

Die vorliegende Erfindung hat sich daher u.a. die Aufgabe gestellt, einen Säulenanschluß für den vorstehend genannten Zweck zu schaffen, mit dessen Hilfe das Auspressen der Trägerflüssigkeit direkt möglich ist, ohne daß die Qualität der Säule beeinträchtigt wird, insbesondere bei den oft erforderlichen hohen Drücken von bis über 120 bar.

Gleichzeitig soll durch diesen Chromatographiesäulenanschluß erreicht werden, daß beim späteren Betrieb der Säule ein Nachsacken der Säulenpackung, wie es natürlicherweise auftreten kann, leicht ausgeglichen werden kann, ohne die Säule öffnen zu müssen. Damit erübrigt sich die Entnahme des Säulenanschlusses, wodurch die Säulenpackung nicht zerstört werden kann.

Die Lösung dieser Aufgabe gelingt gemäß dem Hauptanspruch mit Hilfe eines mehrteiligen Chromatographiesäulenanschlusses, bestehend aus einer am Wulst eines Säulenkörpers oder einem Gewinde einer Metallsäule oder einem diesen umgebenden Mantel verankerten zweiteiligen Verschraubung mit Oberteil und Unterteil, darin befestigter Durchführung mit Kapillare und endseitigem Dichtungseinsatz aus Weichkunststoff, bei dem erfindungsgemäß das Verschraubungsoberteil ein Fenster aufweist, in dem eine Mutter frei drehbar angeordnet ist, die Durchführung ein Außengewinde besitzt, die mit der Mutter kämmt, wobei Mutter und Durchführung aus einem Hartmaterial bestehen, mit dem unteren Ende der Durchführung ein Zwischenstück aus Hartwerkstoff verschraubt ist, wobei zwischen beiden Teilen die Kapillare in Pressung dichtend gehalten sind, an das freie Ende des Zwischenstücks der Dichtungseinsatz angeschraubt ist und Zwischenstück und Dichtungseinsatz miteinander fluchtende Bohrungen besitzen, die an die Kapillare angeschlossen sind, und aneinander anliegende Dichtflächen aufweisen.

Weitere Erfindungsmerkmale finden sich in den Unteransprüchen.

Mit einer derart aufgebauten Chromatographiesäule ist das Verdichten des Bettes direkt und ohne zusätzliche Hilfsmittel möglich, nach dem Verdichten braucht das Bett nicht mehr entspannt zu werden.

Der Anschluß besteht je nach Säulenkörper aus verschiedenen Teilen, wobei die Durchführung, das Zwischenstück und der Dichtungseinsatz in gleicher Weise ausgeführt sein können.

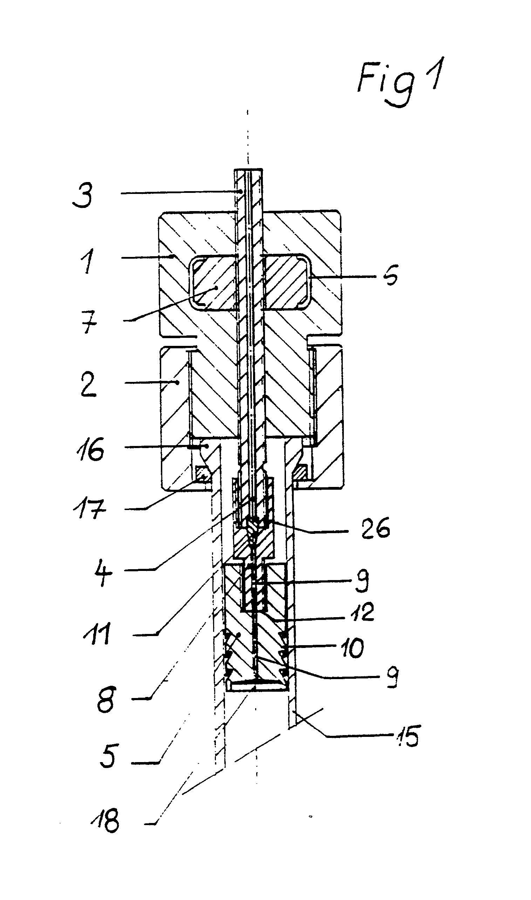

**Variante 1** Verschraubung für einen Säulenkörper mit endständigen Anschlußflanschen (Fig. 1), bestehend aus einem Oberteil mit Außengewinde und einem Unterteil mit Innengewinde und Einlegering.

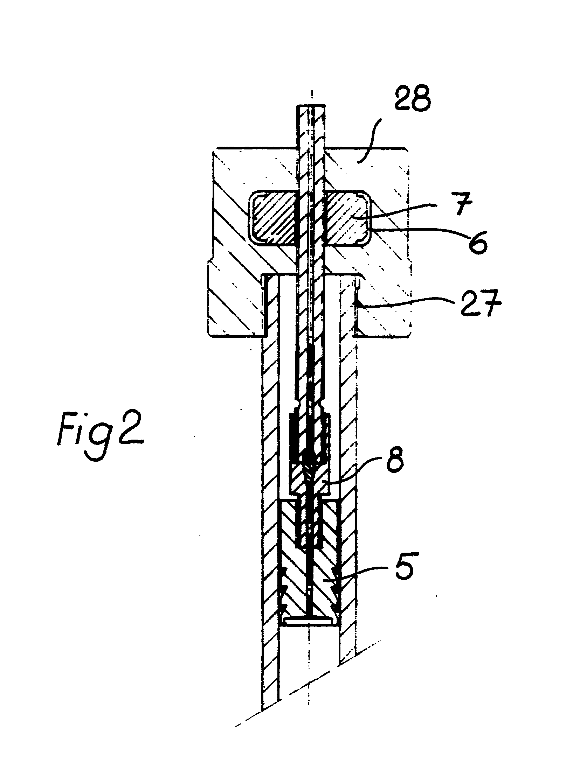

**Variante 2** Verschraubung für einen Säulenkörper mit endständigem Außengewinde, bestehend aus einer Arretiervorrichtung mit Innengewinde, welches direkt auf den Säulenkörper aufgeschraubt werden kann (Fig. 2).

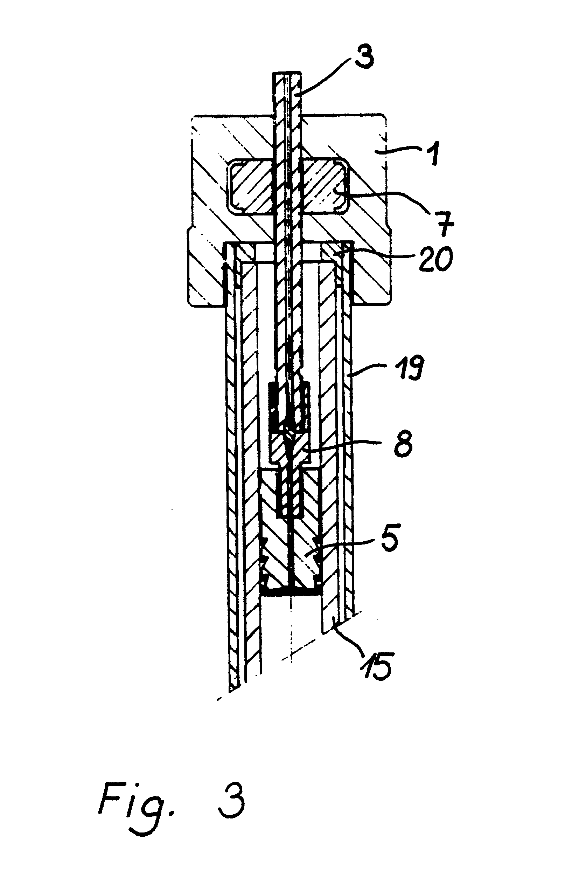

**Variante 3** Verschraubung für einen Säulenkörper ohne endständige Anschlußflansche und ohne Außengewinde, bestehend aus einer Arretiervorrichtung mit Innengewinde, welches direkt auf einem den Säulenkörper umgebenden Schutzmantel aufgeschraubt werden kann (Fig. 3).

Alle Verschlußvarianten besitzen als gemeinsame Bauteile die Durchführung, welche als Führung des Kapillaranschlußschlauches dient, das Zwischenstück, welches den Kapillarschlauch mit Klemmring aufnimmt, und den Dichtungseinsatz mit Fritte. Die Säulenkörper können aus Glas, Keramik, Saphirglas oder Edelstahl gefertigt sein.

Die Durchführung besitzt eine Durchgangsbohrung für die Kapillare, wobei letztere zwischen zwei Hartmaterialien (der Durchführung dun dem Zwischenstück) mit Hilfe eines Klemmringes pressend gehalten wird. Alternativ kann die Kapillare tellerförmig geflanscht und mit einem Metallring, der den Flansch stabilisiert, gehalten werden. Durch beide Prinzipien wird eine hohe Anschlußdichtigkeit zwischen Kapillarende und Dichtungseinsatz erreicht.

Gleichzeitig ergibt sich ein besonders einfacher Aufbau, da die Bohrungen im Zwischenstück und im Dichtungseinsatz, die der Fortsetzung der Kapillare entsprechen, sehr kurz gehalten und einfach hergestellt werden können. Für die Durchführung kann Meterware als Fertigungsmaterial eingesetzt werden, weil in die innen liegende Bohrung zur Aufnahme der Kapillare keine besonderen Maßanforderungen gestellt werden müssen.

Erfindungsgemäß kann die Durchführung insbesondere aus leicht zu bearbeitendem Hartkunststoff, insbesondere aber aus Metall, wie Aluminium oder Edelstahl, bestehen, wobei jedoch sämtliche flüssigkeitsführenden Teile von der Berührung mit metallischen Oberflächen freigehalten werden.

Besonders bewährt für den vorliegenden Zweck hat sich ein Dichtungseinsatz aus Polytetrafluorethylen (PTFE), wobei durch die Kombination mit den Dichtungsflächen des aus Hartkunststoff bestehenden Zwischenstücks hier eine Erhöhung der Druckfestigkeit gegeben ist, da das weiche PTFE des Dichtungseinsatzes gegen Unebenheiten des Zwischenstücks zu fließen in der Lage ist.

Durch die Kombination der vorgenannten Teile mit einer einfachen oder mehrfachen Lippendichtung am Dichtungseinsatz wird einerseits eine hohe Dichtigkeit gewährleistet, andererseits ein geringer Reibungswiderstand mit der Innenoberfläche der Säule erzielt, so daß die beim Absenken des Dichtungseinsatzes gegen die Säulefüllung auftretende Kräfte nicht zu groß werden.

Vorzugsweise besteht das Zwischenstück aus Polychlortrifluorethylen (PCTFE) oder Polyetheretherketon (PEEK), weil dessen Werkstoffeigenschaften für den vorliegenden Zweck besonders gut auf das PTFE des Dichtungseinsatzes abgestimmt sind.

Titan hat sich als Werkstoff für das Zwischenstück ebenfalls als gut geeignet erwiesen.

Die Kapillare kann insbesondere aus PEEK bestehen und, wie oben gesagt, von einem Klemmring zwischen Durchführung und Zwischenstück gehalten werden. Es ist jedoch auch möglich, an die Kapillare endseitig einen tellerförmigen Rand (Flansch) anzuformen und schlauchseitig eine Metallscheibe aufzulegen, wobei die Durchführung auf dieser Scheibe aufliegt. Der tellerförmige Flansch wird zwischen Metallscheibe und Zwischenstück in Pressung gehalten.

Die vorliegende Erfindung betrifft weiterhin ein Verfahren zum Befüllen einer Chromatographiesäule. Die Säule wird dabei mit einer Aufschlämmung des Packungsmaterials gefüllt und mittels eines Stempels komprimiert, wobei Trägerflüssigkeit austritt. Erfindungsgemäß wird auf die Aufschlämmung der Dichtungseinsatz aufgesetzt und mit Hilfe der als Spindel wirkenden Durchführung gegen die Aufschlämmung bewegt. Nach dem Komprimieren der Aufschlämmung, während dessen ein gewisses Quantum Trägerflüssigket austritt, kann die Säule sofort für Substanztrennungen verwendet werden. Dadurch wird die Homogenität der Säulenpackung nicht mehr gestört. Ferner kann die Höhe des Säulenbettes während des Betriebes leicht nachreguliert werden. Dabei wird die homogene Struktur des Säulenbettes beibehalten, weil der Dichtungseinsatz ein gleichmäßiges Nachführen der Säulenpackung über den gesamten Säulenquerschnitt gewährleistet.

Anhand der beiliegenden Abbildungen wird die vorliegende Erfindung näher erläutert.

**Figur 1** Variante 1 des erfindungsgemäßen Chromatographiesäulenanschlusses betreffend Säulenkörper mit endständigen Flanschen

**Figur 2** Variante 2 des erfindungsgemäßen Chromatographiesäulenanschlusses betreffend Säulenkörper mit endständigen Außengewinden

**Figur 3** Variante 3 des erfindungsgemäßen Chromatographiesäulenanschlusses betreffend Säulenkörper, die keine endständigen Flansche und Außengewinde besitzen, mit Schutzmantel.

In **Figur 1** ist ein mehrteiliger Chromatographiesäulenanschluß für eine Chromatographiesäule mit einem Glaskörper (15) dargestellt. Der Säulenglaskörper weist endständige Flansche (16) auf, an denen mit Hilfe eines geteilten Einlegeringes (17) die Verschraubung gehalten wird, welche aus Oberteil mit Außengewinde (1) und Unterteil mit Innengewinde (2) besteht. In einem Fenster (6) ist eine Rändelmutter (7) freidrehend gelagert. Gleichwirkend kann das Fenster z.B. auch als Schlitzführung ausgebildet sein, wobei die Rändelmutter seitlich einschiebbar ist. Die Rändelmutter (7) besitzt ein Innengewinde, das mit dem Außengewinde der Durchführung (3) zusammenwirkt, so daß beim Drehen der Rändelmutter (7) die Durchführung (3) gehoben oder gesenkt wird. Die Durchführung (3) durchgreift frei drehbar das Oberteil (1) und das Unterteil (2) und ragt in den Säulenkörper (15) hinein.

Auf den unteren Teil der Durchführung (3) ist ein Zwischenstück (8) aufgeschraubt, welches vorliegend ein Sackloch mit Innengewinde aufweist. Die Durchführung (3) trägt eine Durchgangsbohrung, in welche ein Kapillarschlauch (4) eingeführt wird. Dieser trägt an einem unteren Ende einen sogenannten Klemmring (11), der in eine konische Aussparung des Zwischenstücks (8) eingreift und das Kapillarende fest umschließt. Durch Verschraubung der Durchführung (3) mit dem Zwischenstück (8) wird der Klemmring (11) gegen das Zwischenstück gepreßt und umschließt dichtend die Kapillare (4). Die Durchführung (3) und das Zwischenstück (8) bestehen aus einem Hartmaterial, wie z.B. PCTFE. Vorzugsweise ist die Durchführung jedoch aus Metall und das Zwischenstück aus PCTFE oder PEEK gefertigt.

Der Klemmring (11) ist koaxial zu einer Bohrung (9) im Zwischenstück (8) ausgerichtet. Das Zwischenstück greift mit einer stumpfen (oder konischen) Dichtfläche (12) in ein Sackloch des Dichtungseinsatzes (5). Dieser besteht aus PTFE und trägt ein Innengewinde, in welches das Außengewinde des Zwischenstücks (8) eingeschraubt wird. Der Dichtungseinsatz (5) besitzt ebenfalls eine zur Kapillare (4) und der Bohrung (9) im Zwischenstück ausgerichtete Durchgangsbohrung, die bis zur Frittenhalterung (18) durchgeführt ist. Der Dichtungseinsatz besitzt zur Abdichtung gegenüber der Innenoberfläche des Säulenkörpers eine (dreifache) Dichtung mit Lippen (10). Am unteren, der Säulenpackung zugewandten Seite trägt der Dichtungseinsatz eine die Fritte aufnehmende Aussparung (18).

Die beiden oberen Teile, die Durchführung (3) und das Zwischenstück (8), sind über die Schraubverbindung (26) starr miteinander verbunden. Da sie zudem aus Hartmaterial bestehen, sind sie in der Lage, auch über eine größere Länge Schubkräfte auf den Dichtungseinsatz zu übertragen. Weil der Dichtungseinsatz aus Weichmaterial (PTFE) besteht, ist dieser in der Lage, auch bei auftretenden Auslenkungen des Zwischenstückes (8) diese Bewegung unter Einwirkung der beim Pressen auftretenden Schubspannung ohne Dichtigkeitsverlust auszugleichen.

In **Figur 2** ist ein mehrteiliger Chromatographiesäulenanschluß für eine Chromatographiesäule mit einem Säulenkörper dargestellt, der endständige Außengewinde trägt. Auf diese Außengewinde (27) wird die Arretiervorrichtung (28) direkt aufgeschraubt.

Die Arretiervorrichtung (28) nimmt wie bei Variante 1 (Fig. 1) die Durchführung (3) auf. Sie besitzt ebenfalls ein Fenster (6), in welchem eine Rändelmutter (7) freidrehend gelagert ist. Gleichwirkend kann das Fenster z.B. auch als Schlitzausführung ausgebildet sein, wobei die Rändelmutter seitlich einschiebbar ist. Die Rändelmutter (7) besitzt ein Innengewinde, das mit dem Außengewinde der Durchführung (3) zusammenwirkt, so daß beim Drehen der Rändelmutter (7) die Durchführung (3) gehoben oder gesenkt wird. Die Konstruktion der Durchführung und des auf die Durchführung (3) aufgeschraubten Zwischenstückes (8) mit wiederum aufgeschraubtem Dichtungsatz (5) entspricht in Aufbau und Funktion Variante 1.

Durch die direkte Verschraubung wird ebenfalls ein starrer Aufbau erreicht, so daß wie bei Variante 1 beim Befüllen der Säule, die zur Auspressung erforderlichen Druckkräfte über die Durchführung und das Zwischenstück auf den Dichtungseinsatz übertragen werden können, der auf die Aufschlämmung des Packungsmaterialbreies drückt.

**Figur 3** zeigt die dritte Variante des Chromatographiesäulenanschlusses, dessen Säulenkörper (15) keine endständigen Flansche oder Außengewinde besitzt. Der Säulenkörper wird von einem Schutzmantel (19) umgeben, der ein Sichtfenster besitzt, so daß der Säulenkörper jederzeit kontrolliert werden kann. Der Schutzmantel trägt endständige Außengewinde (29), auf welche einseitig das Oberteil (1) aufgeschraubt wird. Um einen stabilen, zentrierten Sitz des Glaskörpers zu gewährleisten, wird auf dieses Endstück des Säulenkörpers eine sogenannte Krone (20) aufgesetzt. In der Mitte der Krone läuft die Durchführung (3), in deren Mitte die Kapillare läuft. Die Konstruktion der Durchführung und des auf die Durchführung (3) aufgeschraubten Zwischenstückes (8) mit wiederum aufgeschraubtem Dichtungssatz (5) entspricht in Aufbau und Funktion Variante 1.

Durch die direkt Verschraubung wird ebenfalls ein starrer Aufbau erreicht, so daß wie bei Varinate 1 beim Befüllen der Säule, die zur Auspressung erforderlichen Druckkräfte über die Durchführung und das Zwischenstück auf den Dichtungseinsatz übertragen werden können, der auf die Aufschlämmung des Packungsmaterialbreies drückt.

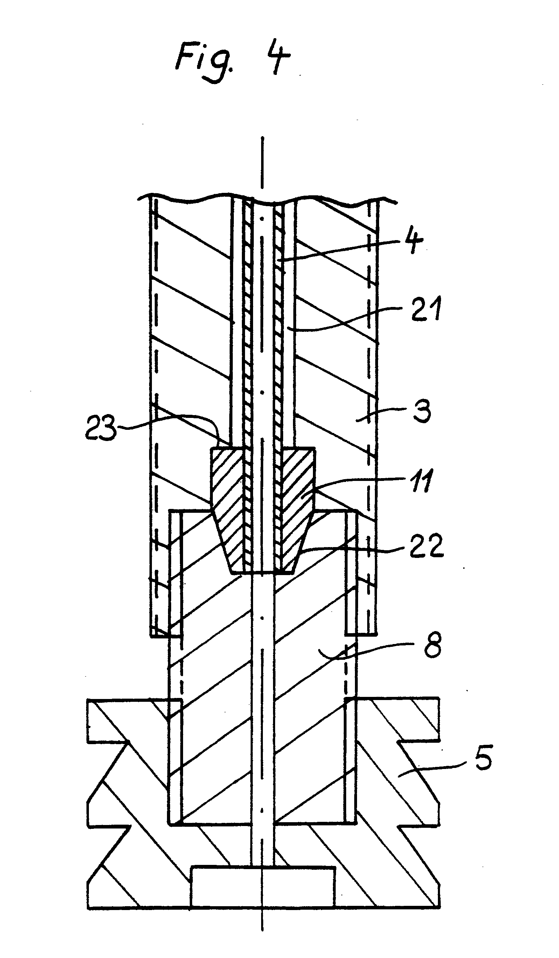

**Figur 4** zeigt in vergrößerter Darstellung den im Säuleninneren liegenden Aufbau von Durchführung (3), Zwischenstück (8) und Dichtungseinsatz (5). In der Durchführung (3) ist eine Durchgangsbohrung (21) angeordnet, in dem die Kapillare (4) (aus PEEK oder Metall) läuft. Diese endet im Klemmring (11). Der Klemmring (11) weist einen unteren Konus (22) auf, und liegt in einem Gegenkonus des Zwischenstücks (8). Die Durchführung (3) besitzt eine auf dem Klemmring (11) aufliegende Schulter (23), die den Klemmring (11) in den Gegenkonus beim Verschrauben von Durchführung (3) und Zwischenstück (8) drückt, wodurch der elastische Klemmring die Kapillare fest umschließt und dichtet. Dieser Klemmring (11) kann in bekannter Weise auch doppelkonisch ausgebildet sein oder mit einer Schneidkante versehen sein.

Analog kann natürlich auch der Klemmring (11) einen oberen Konus aufweisen, wobei dann der Gegenkonus in der Durchführung (3) anzuordnen ist.

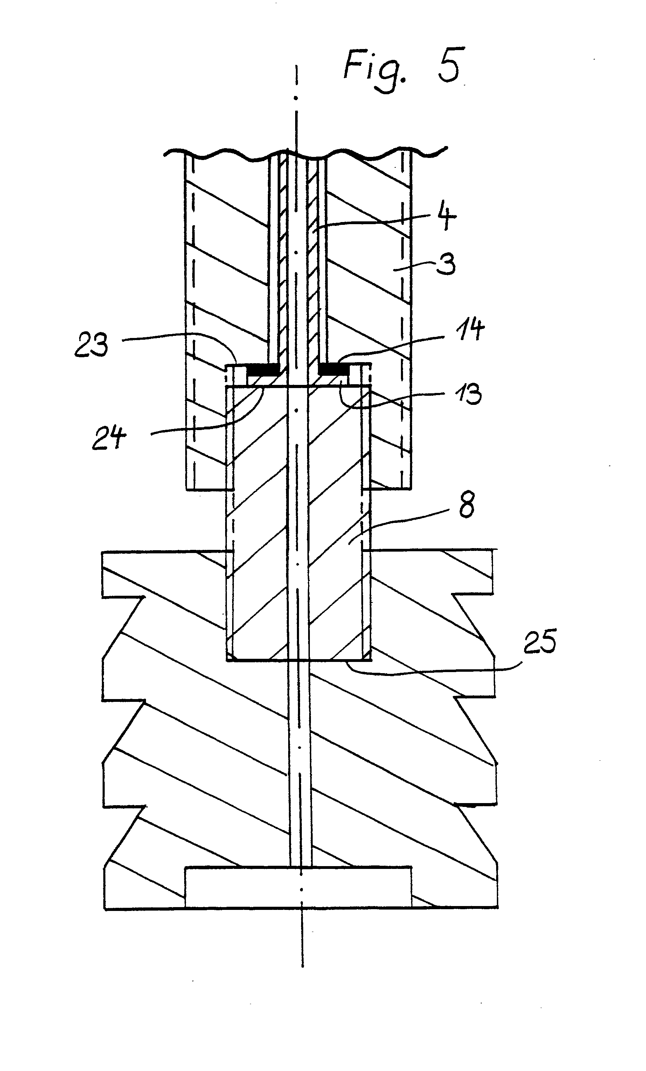

**Figur 5** zeigt die ebenfalls mögliche Abdichtung der Kapillare (4) in der Durchführung (3) mit Hilfe einer Scheibe (14). Mit der Schulter (23) wird die Scheibe (14) auf einen an die Kapillare angeformten Teller (13) gedrückt und preßt diesen zwischen sich und die hier ebene Auflagefläche (24) des Zwischenstückes (8). Das Zwischenstück (8) endet in einem Sackloch des Dichtungseinsatzes (5) und liegt an dessen Boden (25) (stumpf oder konisch) an.

Die Gewinde können grundsätzlich Rechts- oder Linksgewinde sein, die Verschraubung zwischen Durchführung (3) und Zwischenstück 88) kann, wie Fig. 1, 2 und 3 darstellen, innen im Zwischenstück (8) oder auch innen in der Durchführung (3) (Fig. 4 und 5) erfolgen.

## Bezugszeichenliste

| 1 | Oberteil |
|---|---|
| 2 | Unterteil |
| 3 | Durchführung |
| 4 | Kapillarschlauch |
| 5 | Dichtungseinsatz |
| 6 | Fenster |
| 7 | Rändelmutter |
| 8 | Zwischenstück |
| 9 | Bohrung |
| 10 | Lippen |
| 11 | Klemmring |
| 12 | Dichtfläche |
| 13 | Teller |
| 14 | Scheibe |
| 15 | Säulenglaskörper |
| 16 | Flansch |
| 17 | Einlegering |
| 18 | Frittenhalterung |
| 19 | Schutzmantel |
| 20 | Krone |
| 21 | Durchgangsbohrung |
| 22 | unterer Konus |
| 23 | Schulter |
| 24 | Auflagefläche |
| 25 | Boden |
| 26 | Schraubverbindung |
| 27 | Außengewinde |
| 28 | Arretiervorrichtung |
| 29 | Außengewinde |

## Patentansprüche

1. Mehrteiliger Chromatographiesäulenanschluß, bestehend aus einer am Wulst eines Säulenkörpers oder einem Gewinde einer Metallsäule oder einem diesen umgebenden Mantel verankerten zweiteiligen Verschraubung mit Oberteil (1) und Unterteil (2), darin befestigter Durchführung (3) mit Kapillare (4) und endseitigem Dichtungseinsatz (5) aus Weichkunststoff, **gekennzeichnet durch** die folgenden Merkmale

   a) das Verschraubungsoberteil (1) weist ein Fenster (6) auf, in dem eine Mutter (7) frei drehbar angeordnet ist

   b) die Durchführung (3) besitzt ein Außengewinde, das mit der Mutter (7) kämmt

   c) Mutter (7) und Durchführung (3) bestehen aus einem Hartmaterial

   d) mit dem unteren Ende der Durchführung (3) ist ein Zwischenstück (8) aus Hartwerkstoff verschraubt, wobei zwischen beiden Teilen (3, 8) die Kapillare (4) in Pressung dichtend gehalten ist

   e) an das freie Ende des Zwischenstücks ist der Dichtungseinsatz (5) angeschraubt

   f) Zwischenstück (8) und Dichtungseinsatz (5) besitzen miteinander fluchtende Bohrungen (9), die an die Kapillare (4) angeschlossen sind, und weisen aneinander anliegende Dichtflächen (12) auf.

2. Chromatographiesäulenanschluß nach Anspruch 1, **dadurch gekennzeichnet**, daß die Durchführung (3) und die Mutter (7) aus Hartkunststoff oder aus Metall, wie Aluminium oder Stahl, bestehen.

3. Chromatographiesäulenanschluß nach den Ansprüchen 1 oder 2, **dadurch gekennzeichnet**, daß der Dichtungseinsatz (5) mit einer Lippendichtung (10) versehen ist.

4. Chromatographiesäulenanschluß nach einem der Ansprüche 1 bis 3, **dadurch gekennzeichnet**, daß das Zwischenstück (8) aus Hartkunstoff, wie Polychlortrifluorethylen, oder Metall, wie Titan, besteht.

5. Chromatographiesäulenanschluß nach einem der Ansprüche 1 bis 4, **dadurch gekennzeichnet**, daß die Kapillare (4) zwischen Durchführung (3) und Zwischenstück (8) von einem Klemmring (11) oder über einen endseitig an der Kapillare angeformten Teller (13) mit einer Scheibe (14) gehalten ist.

6. Verfahren zum Befüllen einer Chromatographiesäule, wobei man die Säule mit einer Aufschlämmung des Trennkörpers befüllt und die Trägerflüssigkeit mit einem Stempel austreibt, **dadurch gekennzeichnet**, daß man auf die Aufschlämmung den Dichtungseinsatz auflegt und mit Hilfe einer als Spindel wirkenden Durchführung gegen die Aufschlämmung bewegt, Flüssigkeit austreibt, danach den Dichtungseinsatz und die Spindel am Ort in der Säule beläßt und die Chromatograpohie durchführt.

Fig 1

Fig 2

Fig. 3

# Fig. 4

Fig. 5